## Europäisches Patentamt

## European Patent Office

## Office européen des brevets

(19)

(11) Veröffentlichungsnummer: **0 238 725**
**B1**

(12) **EUROPÄISCHE PATENTSCHRIFT**

(45) Veröffentlichungstag der Patentschrift:
**15.03.89**

(51) Int. Cl.⁴: **F16C 19/00, F16C 33/30**

(21) Anmeldenummer: **86117840.8**

(22) Anmeldetag: **20.12.86**

(54) Grosswälzlager.

(30) Priorität: **22.03.86 DE 3609781**

(43) Veröffentlichungstag der Anmeldung:
**30.09.87 Patentblatt 87/40**

(45) Bekanntmachung des Hinweises auf die Patenterteilung:
**15.03.89 Patentblatt 89/11**

(84) Benannte Vertragsstaaten:
**AT BE CH DE ES FR GB GR IT LI LU NL SE**

(56) Entgegenhaltungen:
**FR-A- 2 566 486**
**US-A- 2 400 374**
**US-A- 3 814 488**

**MACHINE DESIGN, Band 42, Nr. 19, 6. August 1970,**
**Seiten 92,93; D.M. COLLIS: "Four ways to combat**
**shock loads on big bearings"**

(73) Patentinhaber: **Hoesch Aktiengesellschaft,**
**Eberhardstrasse 12, D-4600 Dortmund 1(DE)**

(72) Erfinder: **Marquardt, Reinhard, Gorch-Fock Strasse 17,**
**D-4780 Lippstadt(DE)**
Erfinder: **Priesmeier, Ernst, Dipl.-Ing., im neuen**
**Acker 11, D-5860 Iserlohn 15(DE)**

ACTORUM AG

## Beschreibung

Die Erfindung betrifft ein Großwälzlager, bestehend aus zwei Lagerringen und mindestens zwei dazwischen angeordneten Laufbahnsystemen mit je einer Wälzkörperreihe, die auf zugehörigen Laufbahnen der Lagerringe abwälzt.

Großwälzlager dienen dazu, Bauteile drehbeweglich miteinander zu verbinden, wobei ein freier Durchgang im Bereich der Achse der Lager gewährleistet ist. Sie werden für die verschiedensten Einsatzzwecke eingesetzt.

Ein derartiges Großwälzlager nach der US-A 3 814 488 dient dazu, durch die Verdoppelung der Laufbahnsysteme größere Kräfte übertragen zu können, ohne daß jedoch Einfluß auf die Lagereigenschaften erzielt werden kann.

Nach der US-A 2 400 374 ist es zwar möglich, durch Einfügen einzelner elastischer Wälzkörper, deren Durchmesser größer ist als der Einbauraum des Lagersystems, einen höheren Drehwiderstand zu erreichen, jedoch reduziert sich bei dieser Bauform die Tragfähigkeit des Lagers. Darüber hinaus tritt bei Verschleiß einer Wälzkörperkategorie eine Beeinflussung der Funktion der anderen Wälzkörper ein

Bei der deutschen Patentanmeldung E 9735 XII/47 b läßt sich zwar durch Einbau von über Tellerfedern vorgespannten Verbindungsschrauben das Lagerspiel der Lagerringe zueinander einstellen; Laufbahnungenauigkeiten wie Exzentrizitäten oder Wellen können mit dieser Maßnahme jedoch nicht ausgeglichen werden.

Deshalb liegt der Erfindung die Aufgabe zugrunde, ein Großwälzlager zu schaffen, dessen Lagereigenschaften wie Spiel, Vorspannung, Drehwiderstand oder auch Verschleißausgleich ohne äußere Maßnahmen oder Eingriffe am Lager beeinflußt werden können. Dabei sollen auch unterschiedliche Laufbahntoleranzen am Umfang ausgeglichen werden können.

Diese Aufgabe wird erfindungsgemäß durch den kennzeichnenden Teil des Hauptanspruches gelöst. Weitere vorteilhafte Ausgestaltungen der Erfindung ergeben sich aus den kennzeichnenden Teilen der Unteransprüche.

Die mit der Erfindung erzielten Vorteile bestehen insbesondere darin, daß bei dem erfindungsgemäßen Großwälzlager die verschiedensten Lagereigenschaften vorbestimmt beeinflußt werden können. Ein weiterer wesentlicher Vorteil des erfindungsgemäßen Lagers ergibt sich bei Stoßbelastungen. Die Belastungsspitzen werden bereits durch die Verformung der elastischen Wälzkörperreihe aufgenommen, bevor die tragende Wälzkörperreihe aufgrund ihrer Toleranzen die Restlast übernimmt.

Ausführungsbeispiele der Erfindungen sind in der Zeichnung schematisch dargestellt und werden im folgenden näher beschrieben. Es zeigt von dem erfindungsgemäßen Lager

Fig. 1 einen Teilschnitt einer Bauform eines zweiteiligen, zweireihigen Radialkugellagers und

Fig. 2 einen Teilschnitt einer Bauform eines zweiteiligen, zweireihigen Radialkreuzrollenlagers.

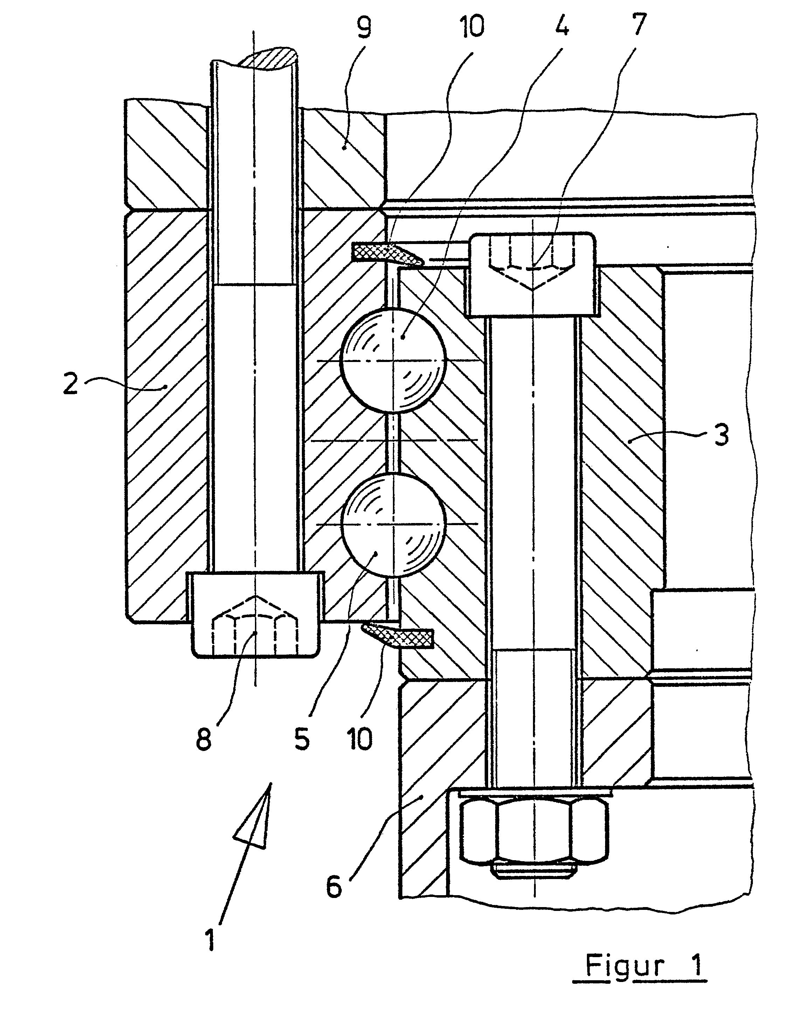

Das Großwälzlager 1 besteht nach Figur 1 aus einem Außenring 2 und einem Innenring 3, die drehbar durch eine obere Wälzkörperreihe 4 aus Metallkugeln und eine untere Wälzkörperreihe 5 aus Kunststoffkugeln miteinander verbunden sind. Die Kunststoffkugeln 5 haben einen größeren Durchmesser als der freie Raum zwischen den Laufbahnen, so daß sie im eingebauten Zustand deformiert sind. Der Innenring 3 ist mit der feststehenden Unterkonstruktion 6 über Befestigungsschrauben 7 und der Außenring 2 mit Hilfe von Halteschrauben 8 mit der drehbaren Oberkonstruktion 9 verschraubt. Der Laufbahnbereich ist, wie üblich, mit Fett oder Öl gefüllt und wird durch Dichtungen 10 nach außen abgedichtet.

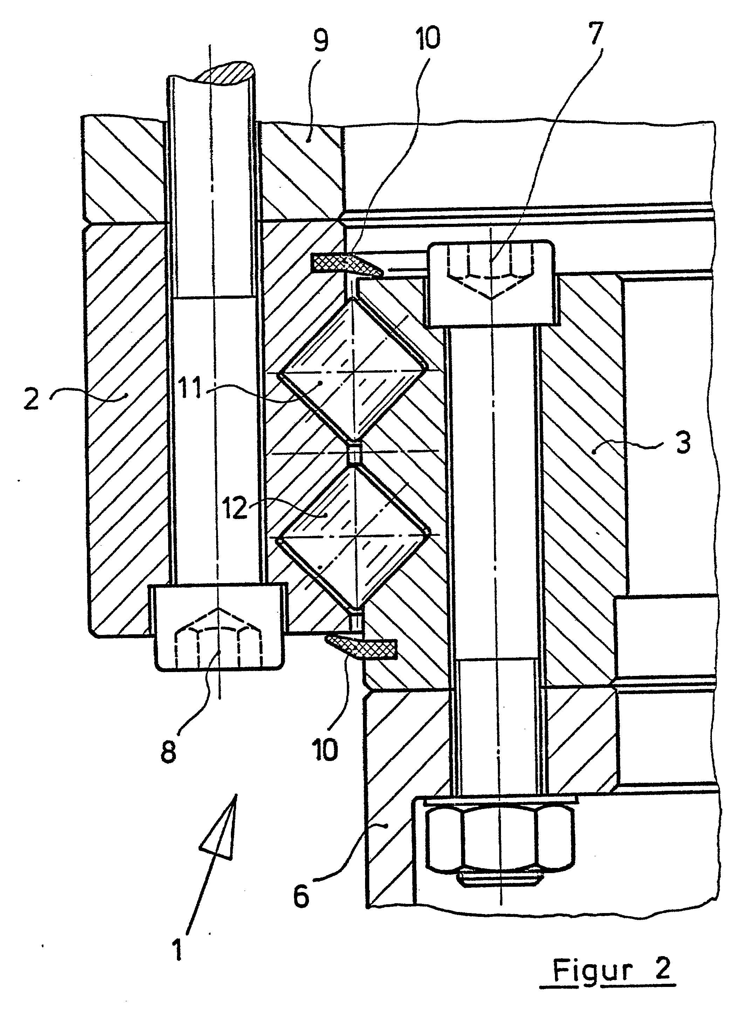

In Figur 2 ist ein gleichartiges Großwälzlager gezeigt wie in Figur 1, jedoch sind hier als obere Wälzkörperreihe 11 Metallrollen eingesetzt, die abwechselnd 90° gegeneinander verdreht angeordnet sind. Es handelt sich somit um ein zweiteiliges, zweireihiges Lager mit einer Kreuzrollenreihe.

Die untere Wälzkörperreihe 12 kann mit abwechselnd 90° gegeneinander verdreht angeordneten Kunststoffrollen bestückt sein, wobei der Durchmesser der Kunststoffrollen größer ist als der freie Raum zwischen den zugehörigen Laufbahnen im Laufbahnsystem, so daß sie wiederum im Einbauzustand verformt sind. In gleicher Weise kann die Wälzkörperreihe 12 jedoch auch mit Kunststoffrollen bestückt sein, die alle in der gleichen Richtung ablaufen, oder aber es können hier auch Kunststoffkugeln, entsprechend Figur 1, Ziffer 5 eingesetzt werden.

## Patentansprüche

1. Großwälzlager, bestehend aus zwei Lagerringen (2, 3) und mindestens zwei dazwischen angeordneten Laufbahnsystemen mit je einer Wälzkörperreihe (4, 5; 11, 12) die auf zugehörigen Laufbahnen der Lagerringe abwälzt, dadurch gekennzeichnet, daß die eine Wälzkörperreihe (4, 11) mit Metall- oder Keramikwälzkörpern und die andere Wälzkörperreihe (5, 12) mit Wälzkörpern aus elastisch nachgiebigem Werkstoff und einem größeren Durchmesser als der Einbauraum des zugehörigen Laufbahnsystems bestückt ist.

2. Großwälzlager nach Anspruch 1, dadurch gekennzeichnet, daß die andere Wälzkörperreihe (5, 12) mit Wälzkörpern aus Kunststoff bestückt ist.

3. Großwälzlager nach den Ansprüchen 1 oder 2, dadurch gekennzeichnet, daß die eine Wälzkörperreihe Kugeln und die andere Kugeln und Rollen aufweist.

## Claims

1. Large roller bearing comprising two bearing rings (2, 3) and at least two race-way systems each with a row of roller members (4, 5; 11, 12) arranged between them, which roll on the associated raceway of the bearing rings, characterised in that one row of roller members (4, 11) is provided with metal or ceramic roller members and the other row of roller members (5, 12) is provided with roller members of an elastically-yieldable material and has a larger diameter than the space of the associated race-way system.

2. Large roller bearing according to claim 1, characterised in that the other row of roller members (5, 12) is provided with roller members of plastics material.

3. Large roller bearing according to claims 1 or 2, characterised in that one row of roller members comprises balls and the other balls and rollers.

**Revendications**

1. Palier à roulement de grande dimension, comprenant deux couronnes (2, 3) et au moins deux chemins de roulement disposés entre elles, chacun avec une série de corps de roulement (4, 5; 11, 12) qui roulent sur les chemins de roulement correspondants des couronnes, caractérisé en ce que la première série de corps de roulement (4, 11) est pourvue de corps de roulement en métal ou en céramique, et l'autre série de corps de roulement (5, 12) est pourvue de corps de roulement en matière élastique déformable et d'un plus grand diamètre que le logement du chemin de roulement correspondant.

2. Palier à roulement de grande dimension selon la revendication 1, caractérisé en ce que l'autre série de corps de roulement (5, 12) est pourvue de corps de roulement en matière synthétique.

3. Palier à roulement de grande dimension selon les revendications 1 ou 2, caractérisé en ce que la première série de corps de roulement comprend des billes, et l'autre des billes et des rouleaux.

Figur 2